# EUROPÄISCHE PATENTSCHRIFT

(11) **EP 0 531 966 B1**
(45) Veröffentlichungstag und Bekanntmachung des Hinweises auf die Patenterteilung: **17.07.1996**
(21) Anmeldenummer: 92115416.7
(22) Anmeldetag: 09.09.1992
(51) Int. Cl.: B29C 47/10, B29C 47/54, B29K 105/06

(54) **Vorrichtung zum Plastifizieren von mit Langfasern verstärktem thermoplastischem Kunststoffgranulat**
Plasticising device for long fiber reinforced plastic pellets
Dispositif pour la plastification des granulés en matière plastique renforcé à fibre longue

(30) Priorität: 10.09.1991 DE 4129969
(43) Veröffentlichungstag der Anmeldung: 17.03.1993
(73) Patentinhaber: HOECHST AKTIENGESELLSCHAFT, 65926 Frankfurt am Main (DE)
(72) Erfinder: Henning, Jürgen, W-6200 Wiesbaden (DE); Maschkowski, Peter, W-3410 Northeim (DE); Hucke, Heinrich, W-4990 Lübbecke (DE); Kiesau, Wilfried, W-4973 Vlotho (DE)

(56) Entgegenhaltungen:
- DE-A- 1 779 918
- US-A- 4 340 562

## Beschreibung

Die Erfindung betrifft eine Vorrichtung zum Plastifizieren von mit Langfasern verstärktem thermoplastischem Kunststoffgranulat, die eine Stopf- und Plastifiziereinrichtung sowie einen Ausstoßzylinder aufweist.

Vorrichtungen der genannten Art sind bekannt.
Die Anwendungsmöglichkeiten thermoplastischer Kunststoffe lassen sich durch Einarbeiten von Verstärkungsfasern erweitern. Durch Zusatz langer Fasern (Faserlänge > 4 mm) können alle mechanischen Kennwerte thermoplastischer Kunststoffe deutlich verbessert werden. Während das Herstellen von Kunststoffgranulat mit Langfaserzusatz weitgehend gelöst ist, bereitet das Plastifizieren eines solchen Granulats nach wie vor Schwierigkeiten, da die Faser bei Verwendung der bekannten Plastifiziereinrichtungen geschädigt wird. So werden die Fasern bereits beim Einzug des Granulats in den Extruder aufgrund der Fließwegumlenkung mechanisch zerkleinert. Hierzu addiert sich die Zerkleinerung der Faser durch ihre Friktion mit den metallischen Teilen auf dem Fließweg des Granulats in der Plastifiziereinheit. Hier will die Erfindung Abhilfe schaffen.

Die Aufgabe wird durch eine Vorrichtung der eingangs genannten Art gelöst, die dadurch gekennzeichnet ist, daß der Ausstoßzylinder senkrecht zur Zylinderachse schwenkbar gelagert ist und daR, wenn sich der Ausstoßzylinder in einer Ausgangsposition befindet, in welcher Granulat von der Stopf- und Plastifiziereinrichtung in den Ausstoßzylinder gefördert wird, ein Ende des Zylinders mit einem Ausstoßkolben verschlossen ist und gegenüber dem anderen Ende parallel zur Zylinderachse die Stopf- und Plastifiziereinrichtung angeordnet ist.

Die Stopf- und Plastifiziereinrichtung kann aus einem temperierbaren Trichter bestehen, in dessen konischem Einlaufteil und zylinderförmigem Auslaufteil eine randgängige Schnecke angeordnet ist. Die Stopf- und Plastifiziereinheit kann aus einem temperierbaren Zylinder mit Plastifizierkolben bestehen. Dabei kann der Zylinder mit einem temperierbaren Kern und der Plastifizierkolben ringförmig ausgebildet sein. Der Plastifizierkolben kann zwecks Freigabe der Zylinderöffnung seitlich verschiebbar angeordnet sein.

Die Vorrichtung bietet im wesentlichen den Vorteil, daß das faserverstärkte Granulat von 10 bis 100 mm Länge und einer Dicke von 0,1 bis 50 mm mit Fasern von 10 bis 100 mm Länge und einer Dicke von 5 bis 30 µm schonend, d.h. ohne mechanische Zerkleinerung in den Plastifizierteil der Vorrichtung und von dort ohne nennenswerte Scherbeanspruchung in den Ausstoßzylinder gelangt.

Im folgenden wird die Erfindung anhand der Figuren näher erläutert. Es zeigt
- Figur 1: die Vorrichtung in Seitenansicht partiell geschnitten in Füllstellung mit strichpunktiert angedeuteter Verschwenkung in Abgabestellung;
- Figur 2: die Vorrichtung in Abgabestellung, geschnitten und
- Figur 3: die Vorrichtung mit alternativer Plastifiziereinrichtung in Seitenansicht geschnitten in Füllstellung, wobei die Abgabestellung strichpunktiert angedeutet ist.

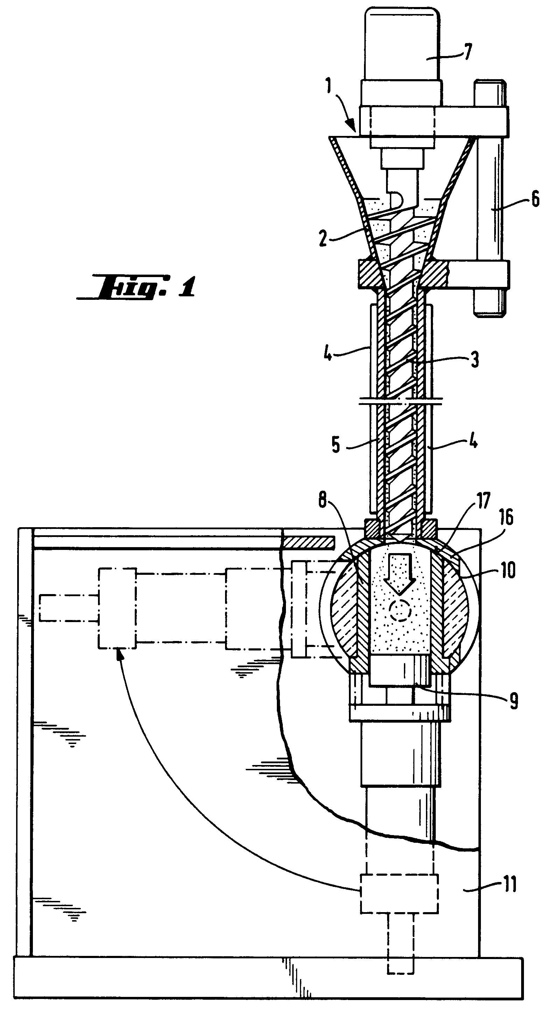

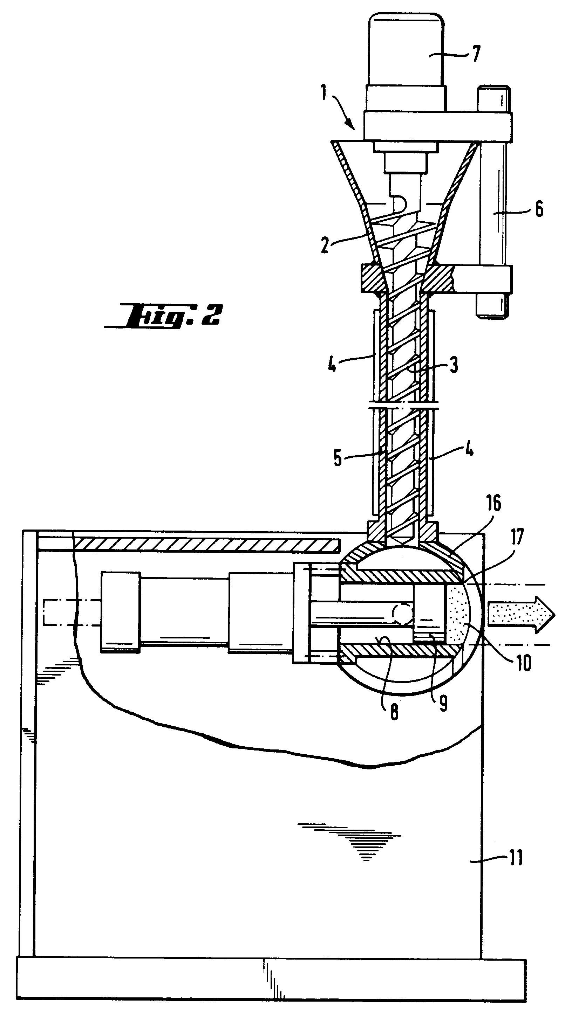

Der Ausstoßzylinder 8 ist senkrecht zur Zylinderachse drehbar gelagert (Figuren 1 und 2). Ein Ende des Ausstoßzylinders 8 ist mit einem Ausstoßkolben 9 verschlossen und in das andere Ende mündet eine Stopf- und Plastifiziereinrichtung, bestehend aus einem Trichter, in dessen konischem Einlaufteil 2 und zylinderförmigem Auslaufteil 5 eine randgängige Schnecke 3 angeordnet ist. Die Schnecke 3 wird mittels Antrieb 7 angetrieben, der durch Gestell 6 gehalten wird. Das faserverstärkte Granulat gelangt über Öffnung 1 in den Trichter, wird dort plastifiziert und mittels Plastifizierschnecke 3 in den Ausstoßzylinder 8 gefördert. Der Ausstoßzylinder 8 ist in einem Gehäuse 16 schwenkbar gelagert. Nach Schwenken des Zylinders 8 bis sein der Stopf- und Plastifiziereinrichtung gegenüber angeordnetes Ende 17 mit der Öffnung 10 im Gehäuse 16 fluchtet, kann sein Inhalt mittels Kolben 9 in ein nicht dargestelltes Verarbeitungs- und Formgebungswerkzeug ausgestoßen werden. 4 deutet die Temperiereinrichtung (Heiz- oder Kühleinrichtung) für die Plastifiziereinrichtung an und 11 das Maschinenbett für die Vorrichtung.

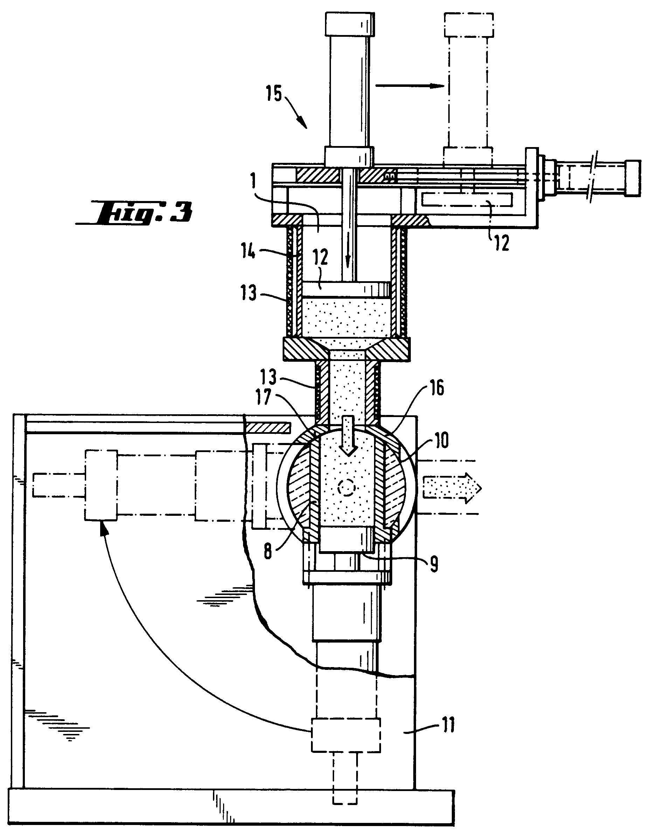

Bei der alternativen Ausführungsform gemäß Figur 3 besteht die Stopf- und Plastifiziereinheit aus dem mit einer Temperiereinrichtung 13 versehenen Plastifizierzylinder 14 und dem Plastifizierkolben 12, der das plastifizierte Granulat in den Ausstoßzylinder 8 fördert. Zum Füllen des Plastifizierzylinders 14 mit Granulat wird der Plastifizierkolben 12 mittels Einrichtung 15 zur Seite hin verschoben.

## Patentansprüche

1. Vorrichtung zum Plastifizieren von mit Langfasern verstärktem thermoplastischem Kunststoffgranulat, die eine Stopf- und Plastifiziereinrichtung sowie einen Ausstoßzylinder (8) aufweist,
dadurch gekennzeichnet, daß der Ausstoßzylinder (8) senkrecht zur Zylinderachse schwenkbar gelagert ist und daß, wenn sich der Ausstoßzylinder in einer Ausgangsposition befindet, in welcher Granulat von der Stopf- und Plastifiziereinrichtung in den Ausstoßzylinder gefördert wird, ein Ende des Zylinders (8) mit einem Ausstoßkolben (9) verschlossen ist und gegenüber dem anderen Ende parallel zur Zylinderachse die Stopf- und Plastifiziereinrichtung angeordnet ist.

2. Vorrichtung nach Anspruch 1, dadurch gekennzeichnet, daß die Stopf- und Plastifiziereinrichtung aus einem temperierbaren Trichter besteht, in dessen konischem Einlaufteil (2) und zylinderförmigem Auslaufteil (5) eine randgängige Schnecke (3) angeordnet ist.

3. Vorrichtung nach Anspruch 1, dadurch gekennzeichnet, daß die Stopf- und Plastifiziereinrichtung aus einem temperierbaren Zylinder (14) mit Plastifizierkolben (12) besteht.

4. Vorrichtung nach Anspruch 3, dadurch gekennzeichnet, daß der Zylinder (14) mit einem temperierbaren Kern versehen und der Plastifizierkolben (12) ringförmig ausgebildet ist.

5. Vorrichtung nach Anspruch 3, dadurch gekennzeichnet, daß der Plastifizierkolben (12) zwecks Freigabe der Zylinderöffnung (1) zur Seite hin verschiebbar angeordnet ist.

## Claims

1. A device for the plastication of thermoplastics granules reinforced with long fibers, which has a stuffing and plastication unit and a discharge cylinder (8), wherein, the discharge cylinder (8) is mounted so as to be pivotable perpendicularly to the cylinder his and wherein, when the discharge cylinder is in a starting position in which granules are conveyed from the stuffing and plastication unit into the discharge cylinder, one end of the cylinder (8) is closed by a discharge ram (9) and is arranged opposite the other end parallel to the cylinder axis of the stuffing and plastication unit.

2. The device as claimed in claim 1, wherein the stuffing and plastication device comprises a hopper having temperature control means, in the conical inlet part (2) and cylindrical outlet part (5) of which hopper is disposed a low edge clearance screw (3).

3. The device as claimed in claim 1, wherein the stuffing and plastication device comprises a cylinder (14), having temperature control means, with a plastication ram (12).

4. The device as claimed in claim 3, wherein the cylinder (14) is provided with a core having temperature control means and the plastication ram (12) is of annular design.

5. The device as claimed in claim 3, wherein the plastication ram (12) is disposed so as to be laterally displaceable for the purpose of clearing the cylinder opening (1).

## Revendications

1. Dispositif pour plastifier des granulés de matière thermoplastique renforcés par des fibres longues et qui possède un dispositif de remplissage et de plastification ainsi qu'un cylindre d'éjection (8), caractérisé en ce que le cylindre d'éjection (8) est monté de manière à pouvoir tourner perpendiculairement à son axe et que, lorsque le cylindre d'éjection est situé dans une position de sortie, dans laquelle les granulés sont refoulés par le dispositif de remplissage et de plastification dans le cylindre d'éjection, une extrémité du cylindre (8) est fermée par un piston d'éjection (9) et le dispositif de remplissage et de plastification est disposé à l'opposé de l'autre extrémité, parallèlement à l'axe du cylindre.

2. Dispositif selon la revendication 1, caractérisé en ce que le dispositif de remplissage et de plastification est constitué par une trémie, qui peut être mise en température et dans la partie d'entrée conique (2) et la partie de sortie cylindrique (5) de laquelle est disposée une vis (3) comportant un filetage dont les filets s'étendent jusque dans une position contiguë à la trémie.

3. Dispositif selon la revendication 1, caractérisé en ce que le dispositif de remplissage et de plastification est constitué par un cylindre (14) pouvant être mis en température et qui comporte un piston de plastification (12).

4. Dispositif selon la revendication 3, caractérisé en ce que le cylindre (14) est équipé d'un noyau pouvant être mis en température et que le piston de plastification (12) est agencé avec une forme annulaire.

5. Dispositif selon la revendication 3, caractérisé en ce que le piston de plastification (12) est disposé de manière à être déplaçable latéralement pour libérer l'ouverture (1) du cylindre.
